# EUROPEAN PATENT SPECIFICATION

(11) **EP 3 306 278 B1**
(45) Date of publication and mention of the grant of the patent: **26.02.2020**
(21) Application number: 16192633.2
(22) Date of filing: 06.10.2016
(51) Int. Cl.: G01F 11/26, G01F 11/00, B65D 51/24

(54) **A DOSING CAP FOR A CONTAINER, A DOSING ELEMENT FOR THE DOSING CAP AND A CONTAINER WITH THE DOSING CAP**
DOSIERUNGSKAPPE FÜR EINEN BEHÄLTER, DOSIERUNGSELEMENT FÜR EINER DOSIERUNGSKAPPE UND BEHÄLTER MIT DER DOSIERUNGSKAPPE
BOUCHON DE DOSAGE POUR UN RÉCIPIENT, ELEMENT DE DOSAGE POUR LE BOUCHON DE DOSAGE ET RÉCIPIENT MUNI D'UN BOUCHON DE DOSAGE

(43) Date of publication of application: 11.04.2018
(73) Proprietor: Teamplast B.V., 6666 LS Heteren (NL)
(72) Inventor: VERSLUIJS, Richard Patrick, 2645 GE Delfgauw (NL); VAN AMERONGEN, Gerard, 6721 HR Bennekom (NL)
(74) Representative: Plaggenborg, Menko Bernard

(56) References cited:
- WO-A1-03/076304
- DE-A1- 19 507 402
- FR-A1- 2 382 681
- US-A- 4 151 934

## Description

The present invention relates to a dosing cap comprising according to the preamble of claim 1. The invention further relates to a dosing element for placement in a cap of a container and to a container comprising the dosing cap according to the invention.

It is known in the art to close off containers by means of a cap. For removing the contents of the container, the cap may be provided with a closable opening. However, dosing a predetermined amount through a simple opening is difficult. A solution is known as a sugar dispenser, known in the art. A disadvantage of such known solution is that it has a bulky appearance. Furthermore, the cap as such, comprising the dispensing part, is larger than the container.

DE19507402A1, which is considered the closest prior art for the present invention, WO 03/076304A1, FR 7706036A1, US 4151934 all relate to a dosing cap for a container with a fixed dosing labyrinth according to the preamble of claim 1. The labyrinth is provided near an opening in the cap. As a consequence, the cap must have a considerable height to contain the labyrinth in its working position.

Such known dosing solution has disadvantages.

The invention aims at providing an improved solution for dosing a predetermined amount of contents of a container, more in particular dosing a predetermined amount of a free-flowing solid.

The invention especially aims at providing an improved dosing cap for closing off a container, for dosing a predetermined amount of contents of a container.

The invention also aims at providing a device for manufacturing a dosing cap for closing off a container, for dosing a predetermined amount of contents of a container.

The invention further aims at providing a container with a dosing cap for closing off said container, for dosing a predetermined amount of contents from said container.

So as to obtain at least one of the above mentioned aims, the invention provides a dosing cap as mentioned in claim 1. This dosing cap has the advantage that in a very simple way a predetermined amount of a substance can be removed from a container. The dosing cap is especially suitable for removing free-flowing solids from a container.

It has also shown that the dosing cap according to the present invention requires only little space, such that the total height of the dosing cap according to the present invention is identical to or slightly higher than a regular cap for a container. Such synergistic effect is a surprising and advantageous effect.

The invention therefore relates to a strongly improved dosing cap for a container.

According to the present invention, the dosing cap comprises a box that can be placed in any of a multitude of positions, to be determined by the user. For example, where one user might want to dose a small amount of, for example, 10 grams of contents in each upside down movement of the container, another user might want to dose only 5 grams, or on the other hand 15 or 20 grams. In that case it is preferred for the dosing cap to enable a user to set the box in any of a multitude of positions. Therefore, according to a preferred embodiment, in the dosing cap according to the invention, said box is attached hingedly with respect to the covering plate, such that in a first position said box's side walls are situated relatively close to the covering plate and in a second position the box's side walls are situated relatively further way from the covering plate. When the box (or the box's side walls) is positioned further away from the covering plate, a larger amount of contents may be dosed.

It is especially preferred that said labyrinth provides a flow path for the solid materials sequentially and alternately towards the covering plate, away from the covering plate and towards the opening. Such path provides the advantage that, when turning the container upside down, a first dose of the contents is received in the cap's chamber defined by the bottom and a proximal wall of the box, two side walls of the box, and the dosing wall. Then, when turning the container into its regular position the said dose is contained on the bottom of the box. Then, after turning the container again, said dose is removed from the container through the cap's opening. Then, during the second upside down movement, a new dose is received in said chamber as mentioned above, and received onto the box's bottom, such that turning the container upside down for a third time removes this dose from the opening, and so on.

It is preferred that the box, comprising the bottom and the side wall extending from said bottom, is comprised as a unitary body. In such embodiment the cap may be a usual cap, manufactured by common production methods. The unitary body should be coupled to the inside of the cap, abutting the cap's inside surface such that an accurate dosing is obtained.

So as to obtain a simple surface for coupling the said unitary body, it is preferred that said covering plate, or in particular the inside surface thereof, is shaped as a substantially flat panel.

In this respect, it is remarked that the term "inside" of the cap relates to the side that is directed to the inside of the container. Hence, when attaching the cap to the container.

According to the invention, the dosing cap comprises at the covering plate's inside surface and extending therefrom, closing walls along the opening's circumference, the box covering the closing walls. In such dosing cap a first closing wall functions as dosing wall, a lateral closing wall is positioned at an opposite side of the opening, and closing side walls connect the dosing wall and the lateral closing wall, such that the box abuts the lateral closing wall and the closing side walls at a position away from the opening, leaving a flow path along the dosing wall.

It has shown that said dosing wall is preferably positioned at an angle of between 60 and 90° with respect to the inside surface, said dosing wall being obliquely directed away from the opening. Such provides an optimum retention of free flowing solids in the chamber as mentioned above, such that only the contents of the chamber that were previously filled in said chamber are removed through the opening and new solids remain in the chamber until the container is moved upside down again.

So as to ensure that a close fitting is obtained between the box (which is movable between several positions with respect to the covering plate of the cap) and the side walls (that are at a fixed position with respect to the covering plate of the cap), in said second position of the box at least part of the box's side walls closely abut the lateral wall and the closing side walls. Then, no contents are spilled between the box's side walls and the dose removed through the opening is identical to a predetermined amount.

The cap usually is of a cylindrical shape, which eases (or even enables) the cap to be screw fitted on a container. Anyway, every cap has a center point. A compact embodiment is obtained since according to the invention said opening is provided aside a cap's center point and said box is hingedly coupled to said cap diametrically from said opening between said center point and the cap's circumferential edge.

As mentioned above, preferably the box can be placed in any of a multitude of positions, to be determined by the user. To that end it is especially preferred that the cap comprises an adjuster for controlling the position of the box with respect to the covering plate.

More in particular, the adjuster is comprised of at least one recess at a fixed position with respect to the covering plate and a mutually cooperating protruding element at the hinged box, or *vice versa,* for placing the box in a predetermined position with respect to the covering plate. A plurality of recess may be provided alongside each other, allowing a user to stepwise determine a preferred position of the box with respect to the covering plate of the cap.

It is preferred that the cap comprises at least two recesses for providing the possibility to place the box in one of at least two different positions. For example, one position may be a transport position, wherein all parts of the dosing mechanism are placed within the volume of the cap. In such embodiment the container may be sealed along its circumferential edge and the cap may be attached to the container whereas the dosing mechanism does not protrude inside the plane defined by the circumferential edge of the container. When a user removes the seal, the box can be moved from the transport position, determined by a first recess, into a use position, determined by another one of said recesses.

A simple and strong adjuster is obtained when the protruding element is provided in a box's side wall. Such easily provides a sufficient torque such that the weight of the contents of the container when turning the container upside down do not remove the box from the set position.

Finally, according to a still further embodiment the present invention relates to a container with a dosing cap according to the invention.

Hereafter, the invention will be further described by means of a drawing. The drawing shows in:
Fig. 1 and 2 show a sectional view of a container with a dosing cap according to the invention,
Fig. 3A and B and Fig. 4A and B show a sectional view of a dosing cap according to an embodiment of the invention,
Fig. 5A, B and C show a set of different views of a dosing cap not according to the invention, and
Fig. 6A and B show a detail of a dosing cap according to the invention,
Fig. 7 shows a top view of the dosing cap according to Fig. 6A,
Fig. 8A and B show another detail of a dosing cap according to the invention,
Fig. 9A, B and C show three views of a dosing cap according to an embodiment of the invention,
Fig. 10A, B and C show three views of a dosing cap according to an embodiment of the invention,
Fig. 11A and B show two views of a dosing cap according to an embodiment of the invention,
Fig. 12A and B show two views of a dosing cap according to an embodiment of the invention,
Fig. 13 shows a perspective view of a dosing cap according to the invention,
Fig. 14 shows an exploded view of a dosing cap according to the invention,
Fig. 15 shows a perspective view of a dosing element for use in a dosing cap according to the invention,
Fig. 16 shows an exploded view of a dosing cap according to the invention,
Fig. 17 shows stages of enabling an embodiment of a dosing element according to the invention,
Fig. 18 shows an exploded view of a dosing cap according to the invention,
Fig. 19 shows stages of enabling an embodiment of a dosing element according to the invention,
Fig. 20A and B show two views of a dosing cap according to an embodiment of the invention.

The same and similar parts and features have been denoted by the same reference numerals in the figures. However, for ease of understanding the figures, not all parts that are required for a practical embodiment have been shown in the figures.

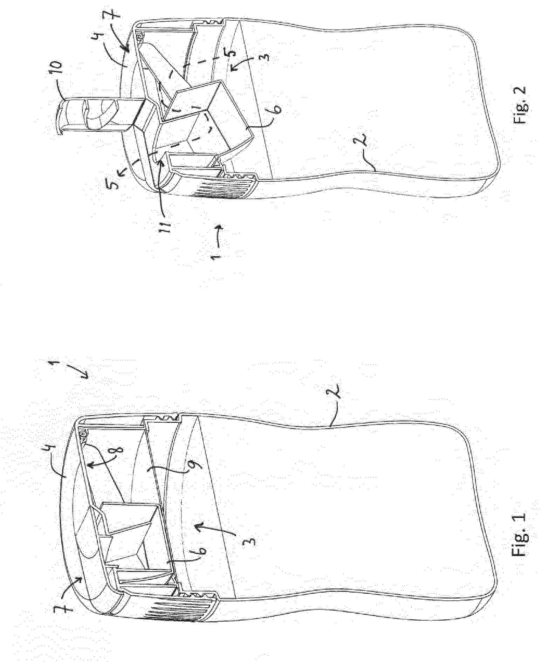

Fig. 1 and Fig. 2 show a sectional view of a dosing cap 1 on a container 2 in an upright position. The dosing cap 1 is embodied for removing contents from the container 2 in a controlled manner. To that end, the dosing cap 1 comprises a dosing element 3 that is coupled to the actual cap member 4. In Fig. 1 the dosing element 3 is shown in a transport position whereas Fig. 2 shows the dosing element 3 in a use position. Contents, for example and preferably, are comprised of free flowing solids, for example food products. As shown in Fig. 2, the dosing element 3 in dosing cap 1 provides a labyrinth 5, generally identified by dotted arrow 5, such that not all contents are removed from the container 2 when same is turned upside down.

The dosing element 3 comprises a box 6 that can be hinged with respect to the covering plate 7 of the cap member 4. In its transport position the box is placed close to or might even abut inside surface 8 of cap member 4. In that position, the box 6 lies between a seal 9, sealing the container 2, and the cap member 4. When a user wants to use the contents of the container 2, the dosing cap 1 is removed from the container 2, the seal 9 is removed and the box 6 is brought into the use position as shown in Fig. 2. Then, the dosing cap 1 is replaced on the container 2. By opening pull tab 10 contents may be removed from the container through opening 11.

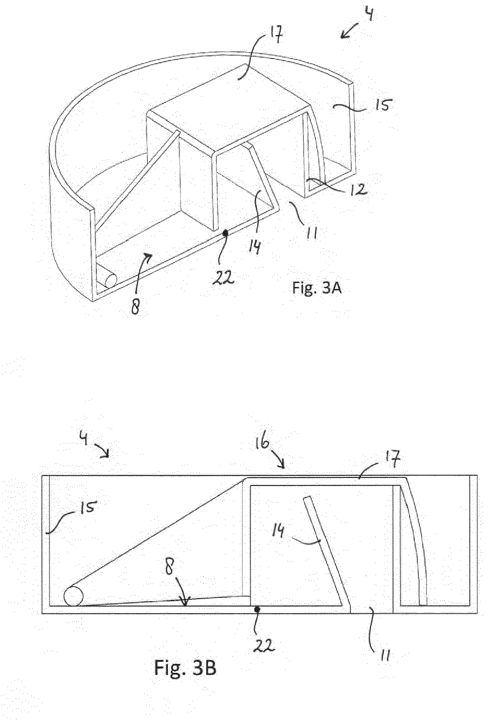

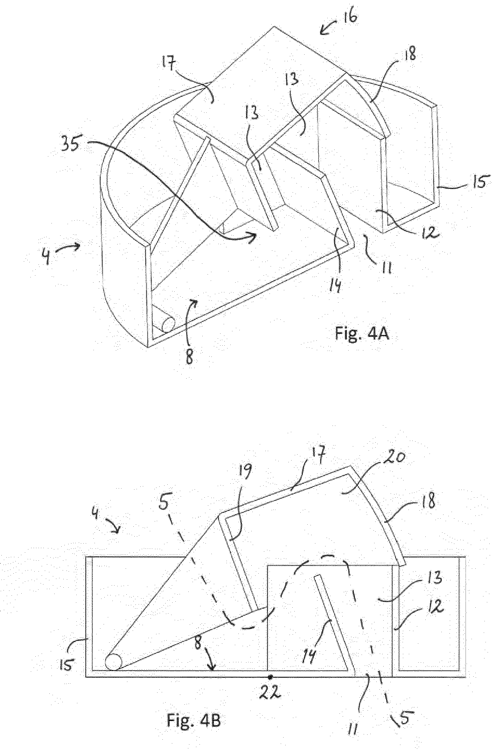

Fig. 3A, Fig. 3B, Fig. 4A and Fig. 4B show a detailed view of the dosing cap 1, removed from the container 2, in a partially cut out view. Fig. 3 shows the cap in its transport position and Fig. 4 in the use position. Figures A show a perspective view whereas figures B show a sectional view. The cap member 4 has at its inside surface 8 adjacent the opening 11 some closing walls 12, 13. The opening 11 is provided at a position between a central point 22 of the cap member 4 and a side rim 15. Closing wall 12 is a lateral wall 12, whereas closing wall 13 is a closing side wall. At the opposite end of the opening 11 another closing side wall 13 is provided (not visible in this drawing). A dosing wall 14 is provided adjacent the opening 11 opposite with respect to the lateral closing wall 12. As can be seen in the embodiment of the present Fig. 3 and 4, the dosing wall 14 is placed slanted, the end directing away from the inside surface 8 being placed away from the opening 11. The labyrinth 5 is accomplished by a box 16. The box 16 has a bottom 17 and walls 18, 19, 20 extending from said bottom 17. In a transport position the ends of the box walls 18, 19, 20 are positioned near the inside surface 8, whereas in a use position the said ends are positioned away from the inside surface 8, such that a chamber is obtained with an entrance 35 and an exit at opening 11. Lateral box wall 18 abuts lateral wall 12 and box side wall 20 abuts closing side wall 13, so as to prevent contents of the container 2 escape said chamber. Box wall 19 is positioned away from dosing wall 14 so as to enable contents to reach the chamber and follow the flow path 5.

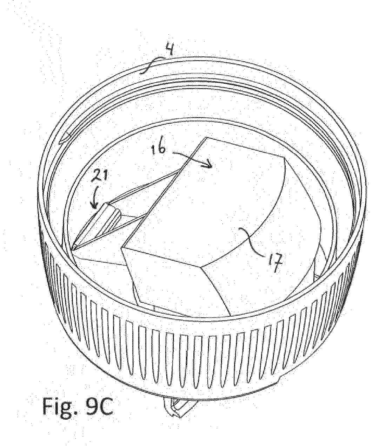

So as to ensure that the box 16 can be placed in both said positions, a hinge 21 (see for example Fig. 9C hereafter) is provided. Said hinge 21 is positioned near side rim 15 opposite the opening 11 with respect to the central point 22.

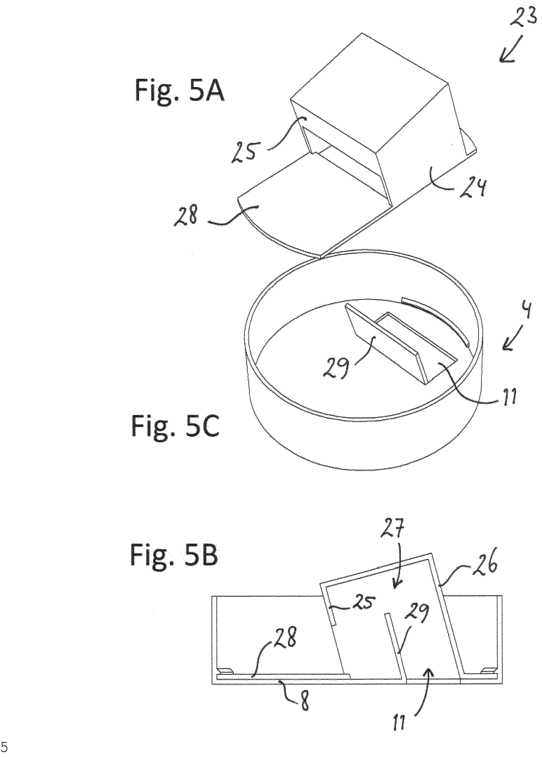

Fig. 5A, 5B and 5C show a dosing cap not according to the present invention. No hinge construction is provided, so a very stable construction is easily obtained. In the embodiment shown, a box shaped fixed construction 23 comprising fixed walls 24, 25, 26, 27 that extend from a fixed bottom 28 that substantially abuts the the inside surface 8 of the cap 4. Hence, the said walls are mutually connected to said fixed bottom 28 and surround the opening 11 at all sides thereof. Furthermore a fixed dosing wall 29 is provided, ensuring that contents of the chamber cannot leave same unintentionally. In the embodiment shown in Fig. 5, the fixed dosing wall 29 is connected to the inside surface 8 of the cap 4, but it may be fixedly connected to the fixed bottom 28 optionally.

The distance between fixed dosing wall 29 and wall 25 determines the amount of contents retained in the chamber when turning the container upside down. This distance may be changed as required.

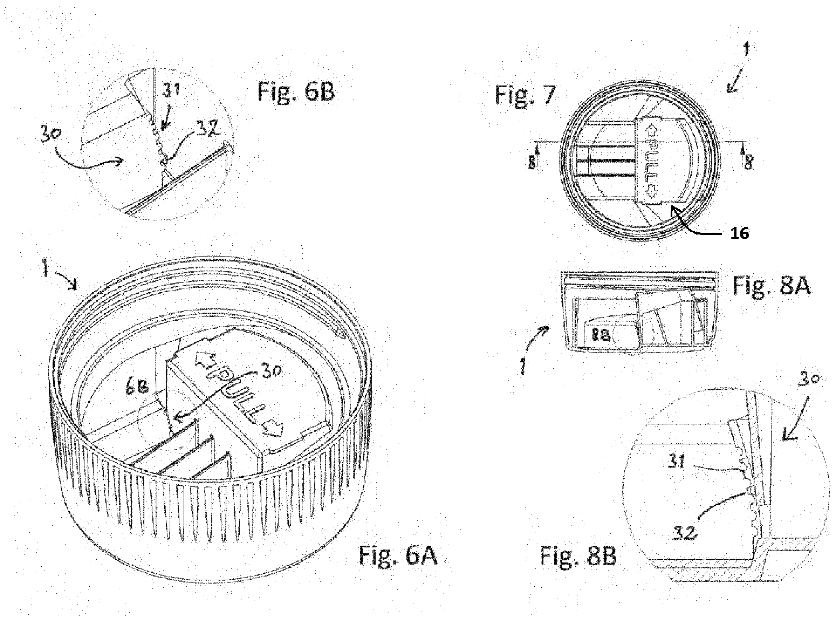

In Fig. 6A, 6B, 7, 8A and 8B a control mechanism 30, also mentioned adjuster 30, is shown for maintaining the box 16 at a preset position. Such control mechanism 30 is part of an embodiment comprising a hinge 21 (see for example Fig. 9C hereafter) for changing the position of the box 16 as, for example, mentioned above.

At a part of the dosing element 3 that is fixed with respect to the cap 4, or at the cap 4 itself, a first part of the adjuster 30 is provided, comprised of at least one recess 31. At the hingeable part, i.e. for example at the box 16, a mutually cooperating protruding element 32 is provided. The protruding element 32 is received in said recess 31, such that the box 16 is retained in a substantially fixed position. Only by applying a sufficient force, the protruding element 32 is removed from the recess 31 and the box 16 can be moved to another position. The required force is larger than the force exerted by the contents of the container 2 acting on the box 16 when turning the container 2 upside down. Of course, the drawing shows only one embodiment which may be altered, for example by providing the recess 31 and protruding element 32 *vice versa.* Also, the said recess 31 and protruding element 32 may be placed somewhere else, as long as the box 16 can be maintained at a changeable position with respect to the cap 4 or the covering plate 7 of the cap 4.

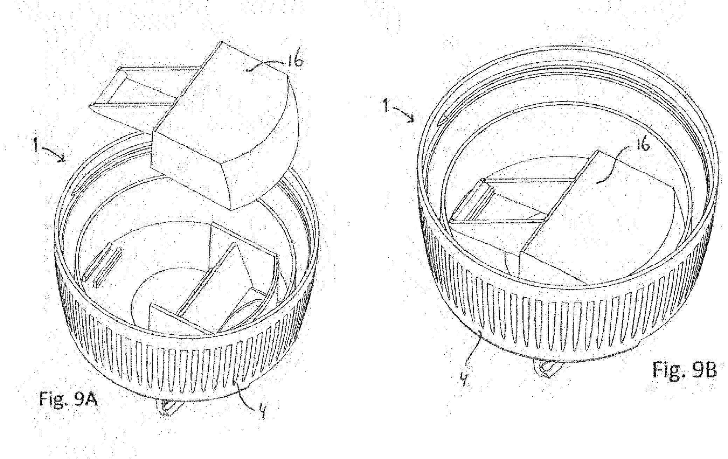

Fig. 9A, 9B and 9C show an embodiment of the dosing cap 1 according to the invention, substantially identical to the embodiment of Fig. 3 and Fig. 4. As can be seen in this Figure 9, the inside surface 8 of the covering plate 7 is substantially flat, allowing a user to easy reach the box 16. Closing walls 12, 13, 14 are provided at the cap's inside surface 8. Fig. 9A shows an exploded view of the cap 4 and the box 16, whereas Fig. 9B shows the merged components in a transport position and Fig. 9C shows the merged components in a use position.

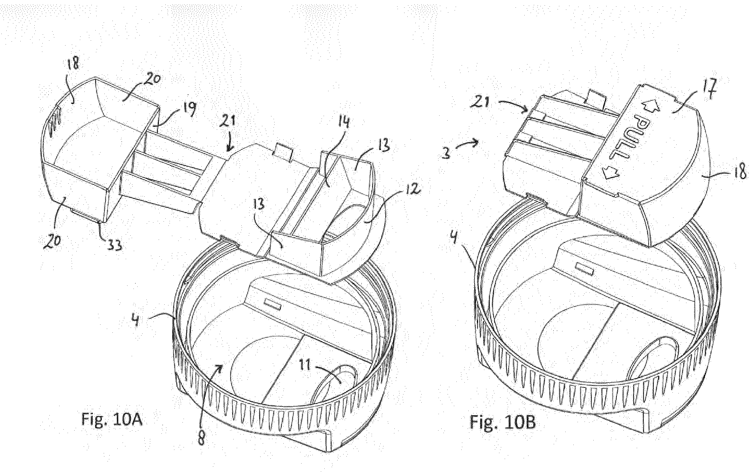

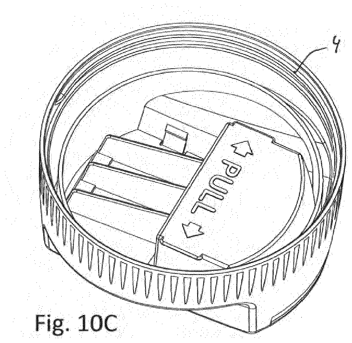

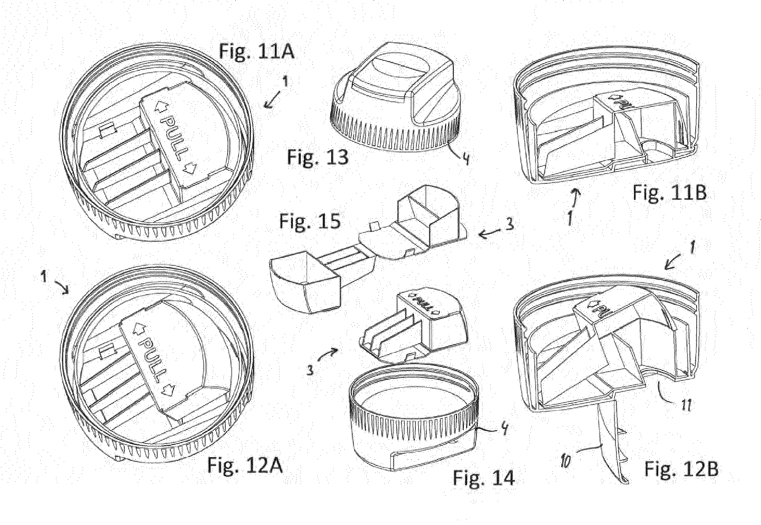

Fig. 10A, 10B and 10C show an embodiment of the dosing cap 1 according to the invention. In this embodiment also, as can be seen in this Figure 10, the inside surface 8 of the cap 4 is substantially flat. However, unlike the embodiment of Fig. 9, the closing walls 12, 13, 14 are mutually provided at a first portion of a dosing element 3, whereas the box is provided at a second portion of dosing element 3. Fig. 10A shows an exploded view of the cap 4 and the dosing element 3 in an unfolded position (also shown in Fig. 15), whereas Fig. 10B shows the cap 4 and the dosing element 3 in a folded position (also shown in Fig. 14), whereas Fig. 10C shows the merged components in a transport position. Such position is shown in Fig. 11A and Fig. 11B as well. From the position of Fig. 10C, the box 16 may be moved upwards so as to reach a use position, as shown in Fig. 12A and Fig. 12B.

The box 16 comprises projecting cams 33 at opposite edges, providing a gripping surface to fingers of a user, enabling same to place the box 16 in a desired position.

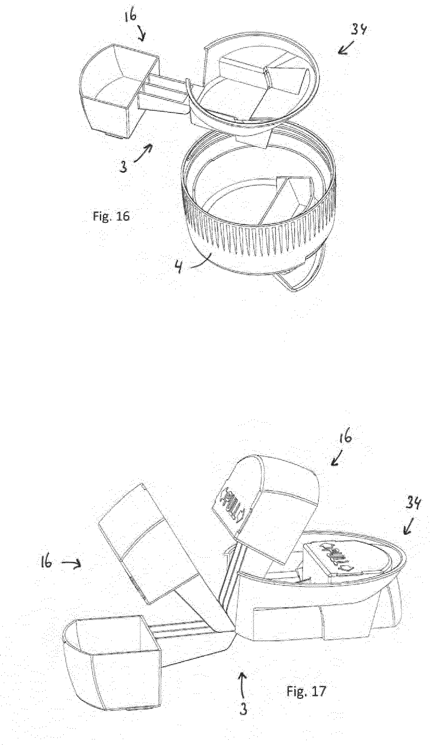

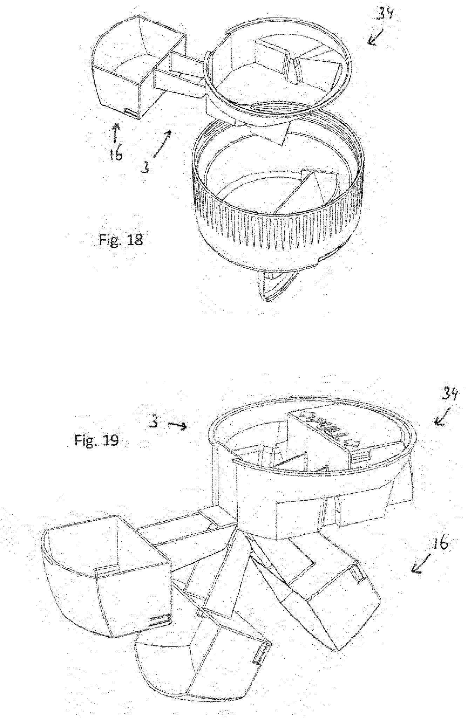

Fig. 16 and Fig. 17 show an embodiment of a dosing element 3, wherein the box part 16 is rotated in clockwise direction so as to reach the folded position. Fig. 18 and Fig. 19 show an embodiment of a dosing element 3, wherein the box part 16 is rotated counterclockwise so as to reach the folded position.

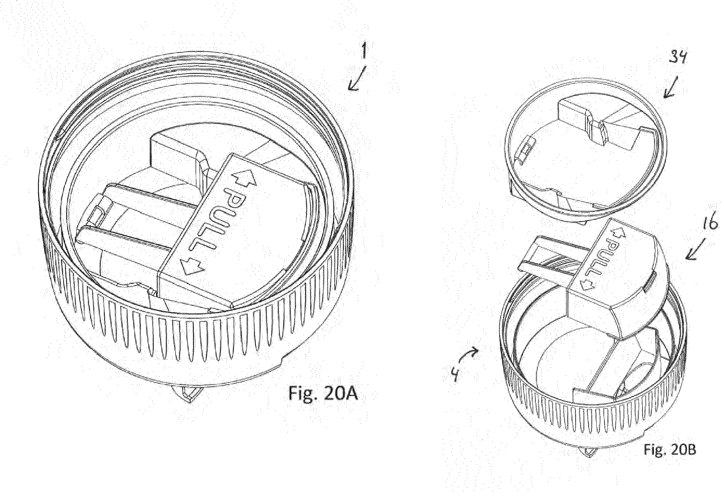

Finally, whereas Fig. 10-19 show embodiments wherein the dosing element is comprised of a mutually and hingeably coupled combination of a base part 34 and a box part 16, Fig. 20A and 20B show an embodiment of separate base part 34 and box part 16. Box part 16 is locked up between the cap member 4 and the base part 34, allowing a restricted motion of box 16, so as to choose between a transport position and a use position.

The invention is not limited to the embodiments as mentioned above and as shown in the drawings. The invention is limited by the claims only.

## Claims

1. A dosing cap (1) for a container (2) for dosing free-flowing solid materials, comprising a covering plate (7) with an opening (11) for removing the solid materials from the container (2),
wherein an inside surface (8) of the covering plate (7) is directed to an inside of the container (2), wherein the covering plate (7) at its inside surface (8) is provided with a labyrinth (5) providing a flow path for the solid materials towards the opening (11);
said labyrinth (5) being defined by a box (6; 16) comprising a bottom (17) and walls (18, 19, 20) extending from said bottom (17) ;
wherein the box walls (18, 19, 20) comprises a box lateral wall (18), box side walls (20) and a box wall (19),
wherein the dosing cap (1) comprises at the covering plate's inside surface (8) and extending therefrom, closing walls (12, 13, 14) along the opening's circumference, the box (6; 16) covering the closing walls (12, 13, 14), and
wherein
- a first closing wall (14) is functioning as dosing wall (14),
- a lateral closing wall (12) is being positioned at an opposite side of the opening (11), and
- closing side walls (13) are connecting the dosing wall (14) and the lateral closing wall (12),
- the dosing wall (14) is provided extending from a position at the covering plate's inside surface (8) at a position between said opening (11) and said box wall (19), said dosing wall (14) is extending towards the box's bottom (17) and ending at a distance from said bottom (17), said dosing wall (14) is extending between opposing portions of said box's side walls (20);
**characterized in that**
said box (6; 16) is hingedly coupled to said covering plate (7), and **in that**
said box is movable between a first position and a second position,
wherein in the first position the box's walls (18, 19, 20) are situated close to the covering plate (8) and
wherein in the second position the box's walls (18, 19, 20) are situated away from the covering plate (8), such that at least part of the box's lateral wall (18) closely abuts the lateral closing wall (12), at least part of the box's side walls (20) closely abuts the closing side walls (13) and box wall (19) is at a position away from the opening (11) and from the dosing wall (14) leaving a flow path along the dosing wall (14).

2. A dosing cap (1) according to claim 1, said labyrinth (5) providing a flow path for the solid materials sequentially and alternately towards the covering plate (7), away from the covering plate (7) and towards the opening (11).

3. A dosing cap (1) according to claim 1, wherein said box (6; 16), comprising the bottom (17) and the side wall (18, 19, 20) extending from said bottom (17), is comprised as a unitary body.

4. A dosing cap (1) according to claim 1, wherein said dosing wall (14) is positioned at an angle of between 60 and 90° with respect to the inside surface (8), said dosing wall (14) being obliquely directed away from the opening (11).

5. A dosing cap (1) according to claim 1, wherein the cap comprises an adjuster (30) for controlling the position of the box (6; 16) with respect to the covering plate (7).

6. A dosing cap (1) according to claim 5, wherein the adjuster (30) is comprised of at least one recess (31) at a fixed position with respect to the covering plate (7) and a mutually cooperating protruding element (32) at the hinged box (6; 16), or *vice versa,* for placing the box (6; 16) in a predetermined position with respect to the covering plate (7).

7. A dosing cap (1) according to claim 6, wherein the cap comprises at least two recesses (31) for providing the possibility to place the box (6; 16) in one of at least two different positions.

8. A dosing cap (1) according to claim 6, wherein the protruding element is provided in a box's side wall (18, 19, 20).

9. A dosing cap (1) according to claim 1, wherein said opening (11) is provided aside a cap's centre point (22) and wherein said box (6;16) is hingedly coupled to said cap diametrically from said opening (11) between said center point (22) and the cap's circumferential edge (15).

10. A dosing cap (1) with a dosing element (3) for placement in the cap, for a container (2) for dosing free flowing solid materials, comprising:
- a covering plate with an opening (11) for removing the solid materials from the container (2), wherein an inside surface (8) of the covering plate (7) is directed to an inside of the container (2), wherein the covering plate (7) at its inside surface (8) is provided with a labyrinth (5) providing a flow path for the solid materials towards the opening (11);
wherein said dosing element (3) comprises a first portion for coupling at the inside of the dosing cap (1), wherein said first portion is embodied for a substantially immobile coupling to said cap (1) and is provided with an opening for removing the solid materials from the container (2), said labyrinth (5) being defined by a box (16) provided at a second portion of the dosing element (3), said box comprising a bottom (17) and walls (18, 19, 20) extending from said bottom (17);
wherein the box walls (18, 19, 20) comprise a box lateral wall (18), box side walls (20) and a box wall (19);
wherein the dosing element (3) comprises at the first portion and extending therefrom, closing walls (12, 13, 14) along the opening's circumference, the box (6; 16) covering the closing walls (12, 13, 14), and
wherein
- a first closing wall (14) is functioning as dosing wall (14),
- a lateral closing wall (12) is being positioned at an opposite side of the opening (11), and
- closing side walls (13) are connecting the dosing wall (14) and the lateral closing wall (12),
wherein the dosing wall (14) is provided extending from a position at the dosing element first portion at a position between said opening (11) and said box wall (19), said dosing wall (14) is extending towards the box's bottom (17) and ending at a distance from said bottom (17), said dosing wall (14) is extending between opposing portions of said box's side walls (20);
**characterized in that**
said box (6; 16) is hingedly coupled to said dosing element first portion and **in that**
said box is movable between a first position and a second position,
wherein in the first position the box's walls (18, 19, 20) are situated close to the covering plate (8) and
wherein in the second position the box's walls (18, 19, 20) are situated away from the covering plate (8), such that at least part of the box's lateral wall (18) closely abuts the lateral closing wall (12), at least part of the box's side walls (20) closely abuts the closing side walls (13) and box wall (19) is at a position away from the opening (11) and from the dosing wall (14) leaving a flow path along the dosing wall (14).

11. A dosing cap (1) with a dosing element (3) for placement in the cap, for a container (2) for dosing free flowing solid materials, comprising:
- a covering plate with an opening (11) for removing the solid materials from the container (2), wherein an inside surface (8) of the covering plate (7) is directed to an inside of the container (2), wherein the covering plate (7) at its inside surface (8) is provided with a labyrinth (5) providing a flow path for the solid materials towards the opening (11);
wherein said dosing element (3) comprises a first portion for coupling at the inside of the dosing cap (1), wherein said first portion is embodied for a substantially immobile coupling to said cap (1) and is provided with an opening for removing the solid materials from the container (2), said labyrinth (5) being defined by a box (16) provided at a second portion of the dosing element (3), said box comprising a bottom (17) and walls (18, 19, 20) extending from said bottom (17);
wherein the box walls (18, 19, 20) comprise a box lateral wall (18), box side walls (20) and a box wall (19);
wherein the dosing cap (1) comprises at the covering plate's inside surface (8) and extending therefrom, closing walls (12, 13, 14) along the opening's circumference, the box (6; 16) covering the closing walls (12, 13, 14), and
wherein
- a first closing wall (14) is functioning as dosing wall (14),
- a lateral closing wall (12) is being positioned at an opposite side of the opening (11), and
- closing side walls (13) are connecting the dosing wall (14) and the lateral closing wall (12),
wherein the dosing wall (14) is provided extending from a position at the covering plate's inside surface (8) at a position between said opening (11) and said box wall (19), said dosing wall (14) is extending towards the box's bottom (17) and ending at a distance from said bottom (17), said dosing wall (14) is extending between opposing portions of said box's side walls (20),
**characterized in that**
said box (6; 16) is hingedly coupled to said dosing element first portion and **in that**
said box is movable between a first position and a second position, wherein in the first position the box's walls (18, 19, 20) are situated close to the covering plate (8) and wherein in the second position the box's walls (18, 19, 20) are situated away from the covering plate (8), such that at least part of the box's lateral wall (18) closely abuts the lateral closing wall (12), at least part of the box's side walls (20) closely abuts the closing side walls (13) and box wall (19) is at a position away from the opening (11) and from the dosing wall (14) leaving a flow path along the dosing wall (14).

12. A container (2) with a dosing cap (1) according to any of the preceding claims 1-11.

## Patentansprüche

1. Dosierkappe (1) für einen Behälter (2) zum Dosieren frei rieselnder fester Stoffe, welche eine Deckplatte (7) mit einer Öffnung (11) zum Entfernen der festen Stoffe aus dem Behälter (2) umfasst,
worin eine Innenoberfläche (8) der Deckplatte (7) einer Innenseite des Behälters (2) zugewandt ist, worin die Deckplatte (7) an ihre Innenoberfläche (8) mit einem Labyrinth (5) versehen ist, das einen Fließpfad für die festen Stoffe zu der Öffnung (11) bereitstellt;
worin das Labyrinth (5) durch einen Kasten (6; 16) definiert ist, der einen Boden (17) und sich von dem Boden (17) erstreckende Wände (18, 19, 20) umfasst;
worin die Kastenwände (18, 19, 20) eine Kastenhinterwand (18), Kastenseitenwände (20) und eine Kastenwand (19) umfassen,
worin die Dosierkappe (1) entlang des Öffnungsumfangs an der Deckplatten-Innenoberfläche (8) und sich davon erstreckend Verschlusswände (12, 13, 14) umfasst, worin der Kasten (6; 16) die Verschlusswände (12, 13, 14) bedeckt, und
worin
- eine erste Verschlusswand (14) als Dosierwand (14) fungiert,
- eine hintere Verschlusswand (12) an einer gegenüberliegenden Seite der Öffnung (11) angeordnet ist, und
- Verschlussseitenwände (13) die Dosierwand (14) und die Verschlusshinterwand (12) verbinden,
- die Dosierwand (14) sich von einer Position an der Deckplatten-Innenoberfläche (8) an einer Position zwischen der Öffnung (11) und der Kastenwand (19) erstreckend vorgesehen ist, worin die Dosierwand (14) sich zu dem Kastenboden (17) erstreckt und in einer Entfernung von dem Boden (17) endet, worin sich die Dosierwand (14) zwischen gegenüberliegenden Bereichen der Kastenseitenwände (20) erstreckt;
**dadurch gekennzeichnet, dass**
der Kasten (6; 16) mit der Deckplatte (7) kippbar gekoppelt ist, und dadurch, dass
der Kasten zwischen einer ersten Position und einer zweiten Position bewegbar ist,
worin in der ersten Position die Kastenwände (18, 19, 20) nahe der Deckplatte (8) angeordnet sind und
worin in der zweiten Position die Kastenwände (18, 19, 20) von der Deckplatte (8) weg angeordnet sind, so dass mindestens ein Teil der Kastenhinterwand (18) der Verschlusshinterwand (12) eng aufliegt, mindestens ein Teil der Kastenseitenwände (20) den Verschlussseitenwänden (13) eng aufliegt und die Kastenwand (19) in einer Position von der Öffnung (11) und von der Dosierwand (14) weg vorliegt, wodurch ein Fließpfad entlang der Dosierwand (14) verbleibt.

2. Dosierkappe (1) nach Anspruch 1, worin das Labyrinth (5) nacheinander und abwechselnd einen Fließpfad für die festen Stoffe zu der Deckplatte (7), von der Deckplatte (7) weg und zu der Öffnung (11) bereitstellt.

3. Dosierkappe (1) nach Anspruch 1, worin der Kasten (6; 16), der den Boden (17) und die sich von dem Boden (17) erstreckende Seitenwand (18, 19, 20) umfasst, als ein einstückiger Körper umfasst ist.

4. Dosierkappe (1) nach Anspruch 1, worin die Dosierwand (14) mit einem Winkel von zwischen 60 und 90° im Bezug zu der Innenoberfläche (8) angeordnet ist, worin die Dosierwand (14) schräg von der Öffnung (11) weg weist.

5. Dosierkappe (1) nach Anspruch 1, worin die Kappe ein Anpassungsstück (30) zum Steuern der Position des Kastens (6; 16) im Bezug zu der Deckplatte (7) umfasst.

6. Dosierkappe (1) nach Anspruch 5, worin das Anpassungsstück (30) mindestens eine Vertiefung (31) an einer festen Position im Bezug zu der Deckplatte (7) und ein gegenseitig zusammenwirkendes vorstehendes Element (32) an dem kippbaren Kasten (6; 16) oder umgekehrt zum Anordnen des Kastens (6; 16) in einer bestimmten Position im Bezug zu der Deckplatte (7) umfasst.

7. Dosierkappe (1) nach Anspruch 6, worin die Kappe mindestens zwei Vertiefungen (31) zum Bereitstellen der Möglichkeit umfasst, den Kasten (6; 16) in eine von mindestens zwei verschiedenen Positionen anzuordnen.

8. Dosierkappe (1) nach Anspruch 6, worin das vorstehende Element in einer Kastenseitenwand (18, 19, 20) vorgesehen ist.

9. Dosierkappe (1) nach Anspruch 1, worin die Öffnung (11) neben einem Kappenmittelpunkt (22) vorgesehen ist und worin
der Kasten (6;16) von der Öffnung (11) diametral zwischen dem Mittelpunkt (22) und dem Kappenumfangsrand (15) mit der Kappe kippbar gekoppelt ist.

10. Dosierkappe (1) mit einem Dosierelement (3) zum Anordnen in der Kappe, für einen Behälter (2) zum Dosieren frei rieselnder fester Stoffe, welche umfasst:
- eine Deckplatte mit einer Öffnung (11) zum Entfernen der festen Stoffe aus dem Behälter (2), worin eine Innenoberfläche (8) der Deckplatte (7) einer Innenseite des Behälters (2) zugewandt ist, worin die Deckplatte (7) an ihrer Innenoberfläche (8) mit einem Labyrinth (5) versehen ist, das einen Fließpfad für die festen Stoffe zu der Öffnung (11) bereitstellt;
worin das Dosierelement (3) einen ersten Bereich zum Kuppeln an der Innenseite der Dosierkappe (1) umfasst, worin der erste Bereich für eine im Wesentlichen immobile Kupplung der Kappe (1) ausgeführt und mit einer Öffnung zum Entfernen der festen Stoffe aus dem Behälter (2) versehen ist, worin das Labyrinth (5) durch einen Kasten (16) definiert wird, der an einem zweiten Bereich des Dosierelementes (3) vorgesehen ist, worin der Kasten einen Boden (17) und sich von dem Boden (17) erstreckende Wände (18, 19, 20) umfasst;
worin die Kastenwände (18, 19, 20) eine Kastenhinterwand (18), Kastenseitenwände (20) und eine Kastenwand (19) umfassen;
worin das Dosierelement (3) in dem ersten Bereich und sich entlang des Öffnungsumfangs davon ersteckende Verschlusswände (12, 13, 14) umfasst, worin der Kasten (6; 16) die Verschlusswände (12, 13, 14) bedeckt, und
worin
- eine erste Verschlusswand (14) als Dosierwand (14) fungiert,
- eine hintere Verschlusswand (12) an einer gegenüberliegenden Seite der Öffnung (11) angeordnet ist, und
- Verschlussseitenwände (13) die Dosierwand (14) und die Verschlusshinterwand (12) verbinden,
worin die Dosierwand (14) sich von einer Position an dem ersten Bereich des Dosierelementes in einer Position zwischen der Öffnung (11) und der Kastenwand (19) erstreckend vorgesehen ist, worin sich die Dosierwand (14) zu dem Kastenboden (17) erstreckt und in einer Entfernung von dem Boden (17) endet, worin sich die Dosierwand (14) zwischen gegenüberliegenden Bereichen der Kastenseitenwände (20) erstreckt;
**dadurch gekennzeichnet, dass**
der Kasten (6; 16) mit dem ersten Bereich des Dosierelementes kippbar gekoppelt ist, und dadurch, dass
der Kasten zwischen einer ersten Position und einer zweiten Position bewegbar ist, worin in der ersten Position die Kastenwände (18, 19, 20) nahe der Deckplatte (8) angeordnet sind und
worin in der zweiten Position die Kastenwände (18, 19, 20) von der Deckplatte (8) weg angeordnet sind, so dass mindestens ein Teil der Kastenhinterwand (18) der Verschlusshinterwand (12) eng aufliegt, mindestens ein Teil der Kastenseitenwände (20) den Verschlussseitenwänden (13) eng aufliegt und die Kastenwand (19) in einer Position von der Öffnung (11) und von der Dosierwand (14) weg vorliegt, wodurch ein Fließpfad entlang der Dosierwand (14) verbleibt.

11. Dosierkappe (1) mit einem Dosierelement (3) zum Anordnen in der Kappe, für einen Behälter (2) zum Dosieren frei rieselnder fester Stoffe, welche umfasst:
- eine Deckplatte mit einer Öffnung (11) zum Entfernen der festen Stoffe aus dem Behälter (2), worin eine Innenoberfläche (8) der Deckplatte (7) einer Innenseite des Behälters (2) zugewandt ist, worin die Deckplatte (7) an ihrer Innenoberfläche (8) mit einem Labyrinth (5) versehen ist, das einen Fließpfad für die festen Stoffe zu der Öffnung (11) bereitstellt;
worin das Dosierelement (3) einen ersten Bereich zum Kuppeln an der Innenseite der Dosierkappe (1) umfasst, worin der erste Bereich für eine im Wesentlichen immobile Kupplung mit der Kappe (1) ausgeführt ist und mit einer Öffnung zum Entfernen der festen Stoffe aus dem Behälter (2) versehen ist, worin das Labyrinth (5) durch einen Kasten (16) definiert wird, der an einem zweiten Bereich des Dosierelementes (3) vorgesehen ist, worin der Kasten einen Boden (17) und sich von dem Boden (17) erstreckende Wände (18, 19, 20) umfasst;
worin die Kastenwände (18, 19, 20) eine Kastenhinterwand (18), Kastenseitenwände (20) und eine Kastenwand (19) umfassen;
worin die Dosierkappe (1) an der Deckplatten-Innenoberfläche (8) und entlang des Öffnungsumfangs sich davon erstreckend Verschlusswände (12, 13, 14) umfasst, worin der Kasten (6; 16) die Verschlusswände (12, 13, 14) bedeckt, und
worin
- eine erste Verschlusswand (14) als Dosierwand (14) fungiert,
- eine Verschlusshinterwand (12) an einer der Öffnung (11) gegenüberliegenden Seite angeordnet ist, und
- Verschlussseitenwände (13) die Dosierwand (14) und die Verschlusshinterwand (12) verbinden,
worin die Dosierwand (14) sich von einer Position an der Deckplatten-Innenoberfläche (8) in einer Position zwischen der Öffnung (11) und der Kastenwand (19) erstreckend vorgesehen ist, worin die Dosierwand (14) sich zu dem Kastenboden (17) erstreckt und in einer Entfernung von dem Boden (17) endet, worin sich die Dosierwand (14) zwischen gegenüberliegenden Bereichen der Kastenseitenwände (20) erstreckt,
**dadurch gekennzeichnet, dass**
der Kasten (6; 16) mit dem ersten Bereich des Dosierelementes kippbar gekoppelt ist, und dadurch, dass
der Kasten zwischen einer ersten Position und einer zweiten Position bewegbar ist, worin in der ersten Position die Kastenwände (18, 19, 20) nahe der Deckplatte (8) angeordnet sind und
worin in der zweiten Position die Kastenwände (18, 19, 20) von der Deckplatte (8) weg angeordnet sind, so dass mindestens ein Teil der Kastenhinterwand (18) der Verschlusshinterwand (12) eng aufliegt, mindestens ein Teil der Kastenseitenwände (20) den Verschlussseitenwänden (13) eng aufliegt und die Kastenwand (19) in einer Position von der Öffnung (11) und von der Dosierwand (14) weg vorliegt, wodurch ein Fließpfad entlang der Dosierwand (14) verbleibt.

12. Behälter (2) mit Dosierkappe (1) nach einem der vorstehenden Ansprüche 1-11.

## Revendications

1. Bouchon de dosage (1) pour un récipient (2) pour le dosage de matières solides qui s'écoulent librement, comprenant une plaque de recouvrement (7) avec une ouverture (11) pour retirer les matières solides du récipient (2),
une surface intérieure (8) de la plaque de recouvrement (7) étant dirigée vers un intérieur du récipient (2), la plaque de recouvrement (7), au niveau de sa surface intérieure (8), comportant un labyrinthe (5) fournissant un trajet d'écoulement pour les matières solides vers l'ouverture (11) ;
ledit labyrinthe (5) étant défini par une boîte (6 ; 16) comprenant un fond (17) et des parois (18, 19, 20) s'étendant à partir dudit fond (17) ;
les parois de boîte (18, 19, 20) comprenant une paroi latérale de boîte (18), des parois de côté de boîte (20) et une paroi de boîte (19),
le bouchon de dosage (1) comprenant, au niveau de la surface intérieure (8) de la plaque de recouvrement et s'étendant à partir de celle-ci, des parois de fermeture (12, 13, 14) le long de la circonférence de l'ouverture, la boîte (6 ; 16) recouvrant les parois de fermeture (12, 13, 14), et
dans lequel
- une première paroi de fermeture (14) sert de paroi de dosage (14),
- une paroi de fermeture latérale (12) est positionnée à un côté opposé de l'ouverture (11), et
- des parois de côté de fermeture (13) relient la paroi de dosage (14) et la paroi de fermeture latérale (12),
- la paroi de dosage (14) est disposée de façon à s'étendre à partir d'une position au niveau de la surface intérieure (8) de la plaque de recouvrement dans une position entre ladite ouverture (11) et ladite paroi de boîte (19), ladite paroi de dosage (14) s'étendant vers le fond (17) de la boîte et se terminant à une distance dudit fond (17), ladite paroi de dosage (14) s'étendant entre des parties opposées desdites parois de côté (20) de la boîte ;
**caractérisé par le fait que**
ladite boîte (6 ; 16) est couplée de manière articulée à ladite plaque de recouvrement (7), et **par le fait que**
ladite boîte est mobile entre une première position et une seconde position,
dans la première position, les parois (18, 19, 20) de la boîte étant situées près de la plaque de recouvrement (8), et
dans la seconde position, les parois (18, 19, 20) de la boîte étant situées à distance de la plaque de recouvrement (8), de telle sorte qu'au moins une partie de la paroi latérale (18) de la boîte est étroitement en butée contre la paroi de fermeture latérale (12), au moins une partie des parois de côté (20) de la boîte est étroitement en butée contre les parois de côté de fermeture (13), et la paroi de boîte (19) se trouve dans une position à distance de l'ouverture (11) et de la paroi de dosage (14), laissant un trajet d'écoulement le long de la paroi de dosage (14).

2. Bouchon de dosage (1) selon la revendication 1, dans lequel ledit labyrinthe (5) fournit un trajet d'écoulement pour les matières solides de manière séquentielle et alternée vers la plaque de recouvrement (7), à l'opposé de la plaque de recouvrement (7) et vers l'ouverture (11).

3. Bouchon de dosage (1) selon la revendication 1, dans lequel ladite boîte (6 ; 16), comprenant le fond (17) et la paroi de côté (18, 19, 20) s'étendant à partir dudit fond (17), se présente sous la forme d'un corps unitaire.

4. Bouchon de dosage (1) selon la revendication 1, dans lequel ladite paroi de dosage (14) est positionnée à un angle entre 60 et 90° par rapport à la surface intérieure (8), ladite paroi de dosage (14) étant dirigée de manière oblique à l'opposé de l'ouverture (11).

5. Bouchon de dosage (1) selon la revendication 1, le bouchon comprenant un dispositif de réglage (30) pour commander la position de la boîte (6 ; 16) par rapport à la plaque de recouvrement (7).

6. Bouchon de dosage (1) selon la revendication 5, dans lequel le dispositif de réglage (30) comprend au moins un évidement (31) dans une position fixe par rapport à la plaque de recouvrement (7) et un élément en saillie de coopération mutuelle (32) au niveau de la boîte articulée (6 ; 16), ou inversement, pour placer la boîte (6; 16) dans une position prédéterminée par rapport à la plaque de recouvrement (7).

7. Bouchon de dosage (1) selon la revendication 6, le bouchon comprenant au moins deux évidements (31) pour fournir la possibilité de placer la boîte (6 ; 16) dans l'une parmi au moins deux positions différentes.

8. Bouchon de dosage (1) selon la revendication 6, dans lequel l'élément en saillie est disposé dans une paroi de côté (18, 19, 20) de la boîte.

9. Bouchon de dosage (1) selon la revendication 1, dans lequel ladite ouverture (11) est prévue à côté d'un point central (22) du bouchon, et ladite boîte (6 ; 16) est couplée de manière articulée audit bouchon diamétralement par rapport à ladite ouverture (11) entre ledit point central (22) et le bord circonférentiel (15) du bouchon.

10. Bouchon de dosage (1) avec un élément de dosage (3) pour mise en place dans le bouchon, pour un récipient (2) pour le dosage de matières solides qui s'écoulent librement, comprenant :
- une plaque de recouvrement avec une ouverture (11) pour retirer les matières solides du récipient (2), une surface intérieure (8) de la plaque de recouvrement (7) étant dirigée vers un intérieur du récipient (2), la plaque de recouvrement (7), au niveau de sa surface intérieure (8), comportant un labyrinthe (5) fournissant un trajet d'écoulement pour les matières solides vers l'ouverture (11) ;
ledit élément de dosage (3) comprenant une première partie pour un couplage au niveau de l'intérieur du bouchon de dosage (1), ladite première partie étant incorporée pour un couplage sensiblement immobile audit bouchon (1) et comportant une ouverture pour retirer les matières solides du récipient (2), ledit labyrinthe (5) étant défini par une boîte (16) située au niveau d'une seconde partie de l'élément de dosage (3), ladite boîte comprenant un fond (17) et des parois (18, 19, 20) s'étendant à partir dudit fond (17) ;
les parois de boîte (18, 19, 20) comprenant une paroi latérale de boîte (18), des parois de côté de boîte (20) et une paroi de boîte (19) ;
l'élément de dosage (3) comprenant, au niveau de la première partie et s'étendant à partir de celle-ci, des parois de fermeture (12, 13, 14) le long de la circonférence de l'ouverture, la boîte (6 ; 16) recouvrant les parois de fermeture (12, 13, 14), et
dans lequel
- une première paroi de fermeture (14) sert de paroi de dosage (14),
- une paroi de fermeture latérale (12) est positionnée à un côté opposé de l'ouverture (11), et
- des parois de côté de fermeture (13) relient la paroi de dosage (14) et la paroi de fermeture latérale (12),
la paroi de dosage (14) est disposée de façon à s'étendre à partir d'une position au niveau de la première partie d'élément de dosage dans une position entre ladite ouverture (11) et ladite paroi de boîte (19), ladite paroi de dosage (14) s'étendant vers le fond (17) de la boîte et se terminant à une distance dudit fond (17), ladite paroi de dosage (14) s'étendant entre des parties opposées desdites parois de côté (20) de la boîte ;
**caractérisé par le fait que**
ladite boîte (6 ; 16) est couplée de manière articulée à ladite première partie d'élément de dosage, et **par le fait que**
ladite boîte est mobile entre une première position et une seconde position,
dans la première position, les parois (18, 19, 20) de la boîte étant situées près de la plaque de recouvrement (8), et
dans la seconde position, les parois (18, 19, 20) de la boîte étant situées à distance de la plaque de recouvrement (8), de telle sorte qu'au moins une partie de la paroi latérale (18) de la boîte est étroitement en butée contre la paroi de fermeture latérale (12), au moins une partie des parois de côté (20) de la boîte est étroitement en butée contre les parois de côté de fermeture (13), et la paroi de boîte (19) se trouve dans une position à distance de l'ouverture (11) et de la paroi de dosage (14), laissant un trajet d'écoulement le long de la paroi de dosage (14).

11. Bouchon de dosage (1) avec un élément de dosage (3) pour mise en place dans le bouchon, pour un récipient (2) pour le dosage de matières solides qui s'écoulent librement, comprenant :
- une plaque de recouvrement avec une ouverture (11) pour retirer les matières solides du récipient (2), une surface intérieure (8) de la plaque de recouvrement (7) étant dirigée vers un intérieur du récipient (2), la plaque de recouvrement (7), au niveau de sa surface intérieure (8), comportant un labyrinthe (5) fournissant un trajet d'écoulement pour les matières solides vers l'ouverture (11) ;
ledit élément de dosage (3) comprenant une première partie pour un couplage au niveau de l'intérieur du bouchon de dosage (1), ladite première partie étant incorporée pour un couplage sensiblement immobile audit bouchon (1) et comportant une ouverture pour retirer les matières solides du récipient (2), ledit labyrinthe (5) étant défini par une boîte (16) située au niveau d'une seconde partie de l'élément de dosage (3), ladite boîte comprenant un fond (17) et des parois (18, 19, 20) s'étendant à partir dudit fond (17) ;
les parois de boîte (18, 19, 20) comprenant une paroi latérale de boîte (18), des parois de côté de boîte (20) et une paroi de boîte (19) ;
le bouchon de dosage (1) comprenant, au niveau de la surface intérieure (8) de la plaque de recouvrement et s'étendant à partir de celle-ci, des parois de fermeture (12, 13, 14) le long de la circonférence de l'ouverture, la boîte (6 ; 16) recouvrant les parois de fermeture (12, 13, 14), et
dans lequel
- une première paroi de fermeture (14) sert de paroi de dosage (14),
- une paroi de fermeture latérale (12) est positionnée à un côté opposé de l'ouverture (11), et
- des parois de côté de fermeture (13) relient la paroi de dosage (14) et la paroi de fermeture latérale (12),
la paroi de dosage (14) étant disposée de façon à s'étendre à partir d'une position au niveau de la surface intérieure (8) de la plaque de recouvrement dans une position entre ladite ouverture (11) et ladite paroi de boîte (19), ladite paroi de dosage (14) s'étendant vers le fond (17) de la boîte et se terminant à une distance dudit fond (17), ladite paroi de dosage (14) s'étendant entre des parties opposées desdites parois de côté (20) de la boîte,
**caractérisé par le fait que**
ladite boîte (6 ; 16) est couplée de manière articulée à ladite première partie d'élément de dosage, et **par le fait que**
ladite boîte est mobile entre une première position et une seconde position,
dans la première position, les parois (18, 19, 20) de la boîte étant situées près de la plaque de recouvrement (8), et
dans la seconde position, les parois (18, 19, 20) de la boîte étant situées à distance de la plaque de recouvrement (8), de telle sorte qu'au moins une partie de la paroi latérale (18) de la boîte est étroitement en butée contre la paroi de fermeture latérale (12), au moins une partie des parois de côté (20) de la boîte est étroitement en butée contre les parois de côté de fermeture (13), et la paroi de boîte (19) se trouve dans une position à distance de l'ouverture (11) et de la paroi de dosage (14), laissant un trajet d'écoulement le long de la paroi de dosage (14).

12. Récipient avec un bouchon de dosage (1) selon l'une quelconque des revendications 1 à 11.
